# EUROPÄISCHE PATENTSCHRIFT

(11) **EP 0 711 715 B1**
(45) Veröffentlichungstag und Bekanntmachung des Hinweises auf die Patenterteilung: **04.11.1998**
(21) Anmeldenummer: 95119847.2
(22) Anmeldetag: 14.07.1993
(51) Int. Cl.: B65G 17/12, B65G 17/36

(54) **Taschenförderer**
Bucket-conveyor
Transporteur à godets

(30) Priorität: 17.07.1992 DE 4223634
(43) Veröffentlichungstag der Anmeldung: 15.05.1996
(62) Teilanmeldung aus: 93917587.3
(73) Patentinhaber: Svedala Industri (Deutschland) GmbH, 22047 Hamburg (DE)
(72) Erfinder: Nolte, Günther, D-47447 Moers (DE)
(74) Vertreter: Rupprecht, Kay, Dipl.-Ing.

(56) Entgegenhaltungen:
- FR-A- 2 399 961

## Beschreibung

Die Erfindung betrifft einen Taschenförderer mit einem endlosen Zugorgan, das über Antriebs- und Umlenktrommeln geführt ist, und mit einer Vielzahl von Taschen, die an dem Zugorgan befestigt sind.

Ein derartiger Taschenförderer geht aus der FR-A-2 399 961, der DE 17 56 905 B und aus der DE 36 36 833 A1 hervor. Während das endlose Zugorgan bei dem aus der ersten Druckschrift bekannten Taschenförderer eine endlose Kette ist, besteht das Zugorgan bei den anderen beiden bekannten Taschenförderern aus einem bei Fördergurten allgemein bekannten Basisgurt. Allen drei bekannten Taschenförderern ist gemeinsam, daß sich die Taschen mit ihren Seitenwänden jeweils nur auf einer Seite des Zugorgans erstrecken. Der Taschenförderer gemäß DE-U-66 03 142 weist demgegenüber kar keine Seitenwände auf, sondern lediglich flexible Taschen, die an Quertraversen in Form von Stangen befestigt sind.

Ein besonderes Problem bei Taschenförderern besteht im allgemeinen darin, die Taschen beim Umlauf über die Antriebs- und Umlenktrommeln unter Beibehaltung der quersteifen Eigenschaften auch dann flexibel zu gestalten, wenn sich die Tasche sowohl auf der Tragseite als auch auf der Laufseite des Zugorgans erstreckt. Dann nämlich werden die auf der Laufseite befindlichen Abschnitte der Taschenseitenwände in Laufrichtung gestaucht, während die sich auf der Tragseite des Zugorgans befindenden Abschnitte der Taschenseitenwände eine Dehnung in im wesentlichen radialer Richtung erfahren.

An dieser Problemstellung setzt die vorliegende Erfindung an, als deren Aufgabe es angesehen wurde, einen Taschenförderer der eingangs genannten Art derart weiterzubilden, daß die Taschen trotz formstabiler Seitenwände eine ausreichende Flexibilität beim Umlauf um die Antriebs- und Umlenktrommeln aufweisen.

Diese Aufgabe wird bei einem Taschenförderer der eingangs genannten Art dadurch gelöst, daß die Seitenwände der Taschen mindestens zwei verschiedene Faltbereiche aufweisen, die sich auf verschiedenen Seiten des Zugorgans, d.h. auf der Laufseite und auf der Tragseite, erstrecken. Durch diese erfindungsgemäße Aufteilung der Seitenwände in zwei verschiedene Faltbereiche wird eine beachtliche Reduzierung des Verschleißes der Taschen erreicht.

Vorteilhafte Weiterbildungen der Erfindung sind in den Unteransprüchen angegeben.

Vorzugsweise ist ein erster Faltbereich, der auf der Laufseite des Zugorgans angeordnet ist, fächerförmig ausgebildet und ein zweiter Faltbereich auf der Tragseite des Zugorgans weist eine zum Zugorgan parallele Wellung auf, wobei die Wellung des zweiten Faltbereichs beispielsweise sägezahnförmig ausgebildet sein kann. Die Wellung ermöglicht das Stauchen der Taschen in radialer Richtung, wobei die asymmetrische Wellung das Entleeren des Schüttgutes erleichtert, indem an der Innenseite der Tasche kein Schüttgut hängen bleibt. Durch diese Ausgestaltung der Seitenwände können sich die Taschen beim Umlauf um die Trommeln besonders gut an die dort entstehende Krümmung im Bereich der Trägergurtebene anpassen.

In weiterer Ausgestaltung weist die Tasche alternativ oder zusätzlich eine randparallele Faltung auf. Hierdurch wird eine Verkürzung bzw. Stauchung aufgefangen, die bis unter die Ebene des Zugträgers reicht. Vorteilhafterweise kann die am Rand umlaufende Faltung so ausgeführt werden, daß sich ganz am Rand eine Lippe ergibt, an welcher der Taschenboden flächig überlappend angeklebt werden kann.

Die Tasche kann ferner ein auf die Bodenwand aufvulkanisiertes Endstück aus Gummi oder gummiartigem Material besitzen, das vorzugsweise mittels Stahleinlagen armiert ist. Im montierten Zustand der Tasche liegt dieses Endstück auf der Befestigungsfläche der Quertraaverse auf. Die Armierung erhöht die Stabilität in diesem Bereich, wobei insbesondere ein Knicken vermieden wird.

Um eine besonders gute Führung des Schüttgutes beim Be- und Entladen zu erreichen, steht das Endstück der Tasche in der Befestigungsposition über eine Quertraverse, an welcher die Tasche befestigt ist, über. Weiterhin wird hierdurch erreicht, daß das überstehende Endstück die jeweilige Quertraverse abdeckt und somit ein direkter Kontakt der Quertraverse mit dem Schüttgut vermieden wird. Darüber hinaus schützt das überstehende Endstück die Stirnkante der Quertraverse vor dem Schüttgut.

Im folgenden wird ein Ausführungsbeispiel der Erfindung anhand einer schematischen Zeichnung näher erläutert.

Es zeigen:
- Fig. 1: eine schematische Seitenansicht des erfindungsgemäßen Taschenförderers;
- Fig. 2: eine erfindungsgemäß ausgebildete Tasche des Taschenförderers in Einzeldarstellung; und
- Fig. 3: einen Längsschnitt durch einige am Zugorgan befestigte Taschen.

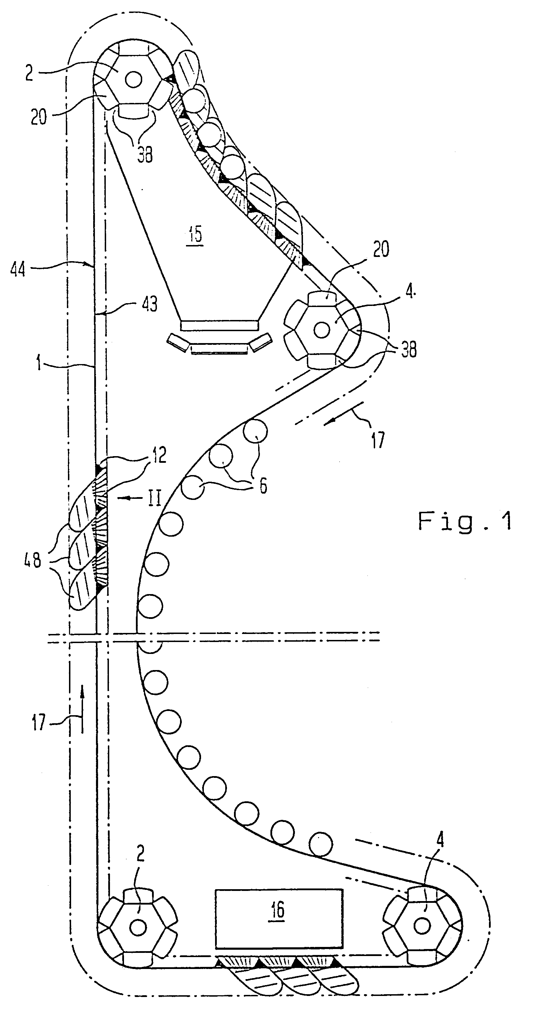

Fig. 1 zeigt eine schematische Seitenansicht eines erfindungsgemäßen Taschenförderers. Dieser besteht im wesentlichen aus einem endlosen Zugorgan 1, das in Richtung der Pfeile 17 über eine untere und eine obere Antriebstrommel 2, eine untere und obere Umlenktrommel 4 sowie um eine ganze Reihe von Ablenktrommeln 6 geführt ist, und aus einer Vielzahl hintereinander an dem Zugorgan 1 befestigter Taschen 48 zur Aufnahme des Schüttguts an einer Einfüllschurre 16 und zur Abgabe des Schüttguts an einer Ablaufschurre 15. Die Ablenktrommeln 6 haben hierbei die Aufgabe, den Rücklauf des Zugorgans 1 möglichst dicht an den Vorlauf heranzubringen, damit beispielsweise eine gemeinsame Tunnelförderung des Vor- und des Rücklaufs möglich ist, oder auch nur eine Streckenführung des Vor- und des Rücklaufs auf einer verhältnismäßig engen Trasse. Um die gemeinsame Führung des Vor- und des Rücklaufs auf einer engen Trasse über weite Strecken anzudeuten, ist die schematische Seienansicht unterhalb der drei im Vorlauf befindlichen Taschen 48 unterbrochen dargestellt.

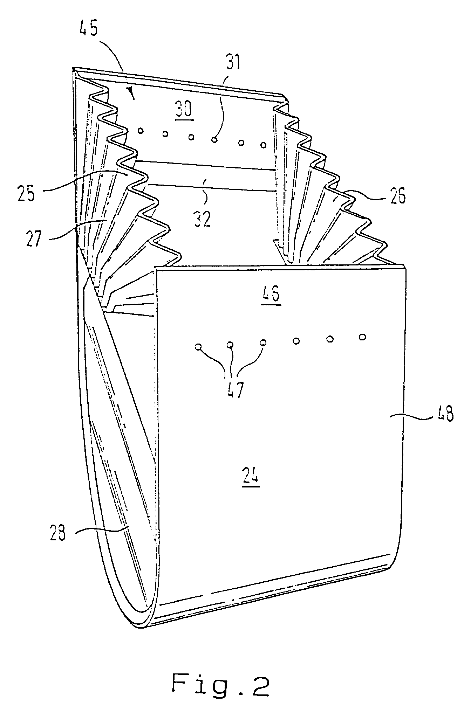

Fig. 2 zeigt eine perspektivische Ansicht einer einzigen der Taschen 48 gemäß Fig. 1. Die im Vertikalschnitt näherungsweise U-förmig ausgebildeten Taschen 48, die alle gleich ausgebildet sind, besitzen eine Bodenwand 24 aus Gummi oder gummiartigem Material, sowie Seitenwände 25, 26, die faltbar ausgebildet sind. Die Bodenwand 24 besitzt quersteife Eigenschaften, was beispielsweise durch eine eingebrachte Armierung erreicht werden kann. Die Seitenwände 25, 26, von denen hier nur die Seitenwand 25 nahezu vollständig zu sehen ist, sind in zwei Faltbereiche 27, 28 aufgeteilt, von denen der erste Faltbereich 27 eine fächerförmige Ausbildung besitzt und auf der Laufseite 43 des Zugorgans 1 angeordnet ist, und der zweite Faltbereich 28 eine parallel zum Zugorgan 1 gerichtete wellenartige Faltung besitzt und auf der Tragseite 44 des Zugorgans 1 angeordnet ist. Der erste Faltbereich 27 ermöglicht die Stauchung der Seitenwände 25, 26 beim Umlauf um die Antriebstrommeln 2 bzw. die Umlenktrommeln 4 und die Dehnung der Seitenwände 25, 26 beim Umlauf um die Ablenktrommeln 6. Die Wellung des zweiten Faltbereichs 28 verläuft asymmetrisch zur Trägergurtebene und weist vorzugsweise eine Sägezahnform auf. Die Wellung des zweiten Faltbereiche 28 ermöglicht eine Stauchung der Seitenwände 25, 26 und damit der Taschen 48 beim Umlauf um die Trommeln 2, 4, 6 in radialer Richtung. Dies ist beim Umlauf um die Trommeln notwendig, um eine Anpassung der Taschenform an die sich einstellende Krümmung durch die Umlenkung des Zugträgers 1 zu ermöglichen. Hierbei trägt die asymmetrische Wellung der Seitenwände 25, 26 in deren zweitem Faltbereich 28 dazu bei, das Entleeren des Schüttguts zu erleichtern. Durch die vorzugsweise gewählte Sägezahnform der Wellung bleibt beim Entleeren insbesondere kein Schüttgut in der Wellung hängen, so daß eine Ansammlung von Resten in den Taschen 48 vermieden wird.

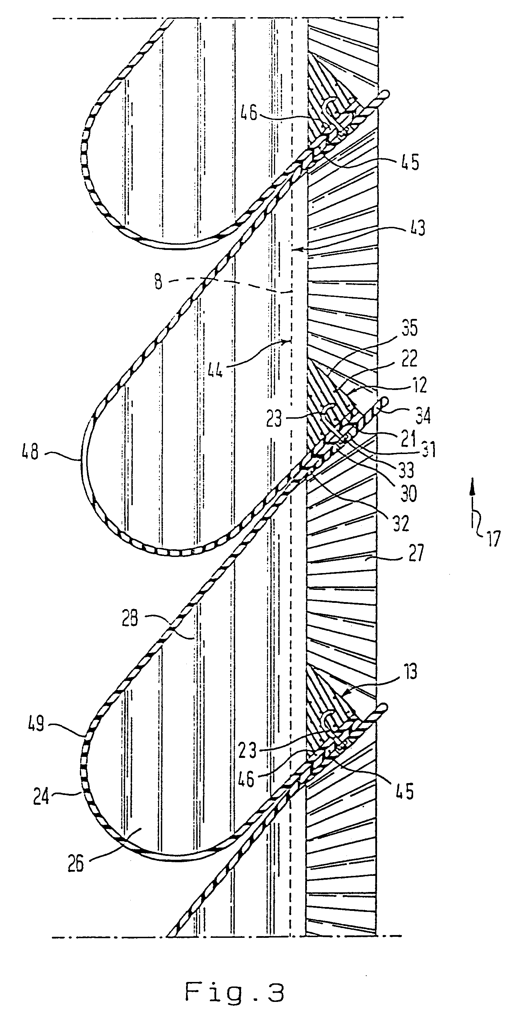

Das in Förderrichtung vorn befindliche Ende 45 der Bodenwand 24 ist mit Sacklöchern 31 versehen, und das in Förderrichtung hinten befindliche Ende 46 mit Montagelöchern 47, wobei die Sacklöcher 31 einer Tasche mit den Montagelöchern 47 einer benachbarten Tasche fluchten. Mittels der Montagelöcher 47 und der Sacklöcher 31 wird die Tasche 48 zwischen zwei benachbarte Quertraversen 12, 13 (vgl. Fig. 3) eingehängt, was nachstehend anhand Fig. 3 erläutert werden wird.

Fig. 3 zeigt einen Längsschnitt durch einige an dem Trägergurt 8 befestigte Taschen 48. Anhand dieser Darstellung wird deutlich, daß die Quertraversen 12, 13 die Querschnittsform eines Dreiecks, insbesondere die eines rechtwinkligen gleichschenkligen Dreiecks aufweisen. Während die Hypotenuse dieses Dreiecks auf dem Trägergurt 8 befestigt ist, bildet eine Seitenfläche der Quertraversen 12, 13 die plane Befestigungsfläche 21 zur Befestigung der Taschen 48. Die Befestigung erfolgt mittels der Montagelöcher 47 und der Sacklöcher 31, indem das in Förderrichtung vorn befindliche Ende 45 einer Tasche 48 an einer in Förderrichtung vorn befindlichen Quertraverse 12 auf die dort senkrecht aus der Befestigungsfläche 21 heraustretenden Schraubbolzen 23, 37 aufgesteckt wird, und mit ihrem in Förderrichtung hinten befindlichen Ende 46 auf die gleichen Schraubbolzen 23, 37 der nachfolgenden Quertraverse 13.

Anhand Fig. 3 wird ferner nochmals deutlich, daß die Seitenwände 25, 26, von denen hier nur die Seitenwand 26 dargestellt ist, in zwei Faltbereiche 27, 28 aufgeteilt sind, von denen der erste Faltbereich 27 eine fächerförmige Ausbildung besitzt und auf der Laufseite 43 des Zugorgans 1 angeordnet ist, und der zweite Faltbereich 28 eine parallel zum Zugorgan 1 gerichtete wellenartige Faltung besitzt und auf der Tragseite 44 des Zugorgans 1 angeordnet ist.

## Patentansprüche

1. Taschenförderer mit einem endlosen Zugorgan (1), das über Antriebs- und Umlenktrommeln (2, 4) geführt ist, und mit einer Vielzahl von Taschen (48), die an dem Zugorgan (1) befestigt sind,
dadurch gekennzeichnet,
daß die Seitenwände (25, 26) der Taschen (48) mindestens zwei verschiedene Faltbereiche (27, 28) aufweisen, die sich auf verschiedenen Seiten des Zugorgans (1) erstrecken.

2. Taschenförderer nach Anspruch 1,
dadurch gekennzeichnet,
daß ein erster Faltbereich (27) fächerförmig ausgebildet ist und auf der innenliegenden Seite des Zugorgans (1) angeordnet ist und daß ein zweiter Faltbereich (28) eine zum Zugorgan (1) parallele Wellung aufweist und auf der nach außen gerichteten Seite des Zugorgans (1)angeordnet ist.

3. Taschenförderer nach Anspruch 2,
dadurch gekennzeichnet,
daß die Wellung des zweiten Faltbereichs (28) sägezahnförmig ausgebildet ist.

4. Taschenförderer nach einem der Ansprüche 1 bis 3,
dadurch gekennzeichnet,
daß die Tasche (48) eine randparallele Faltung aufweist.

5. Taschenförderer nach einem der Ansprüche 1 bis 4,
dadurch gekennzeichnet,
daß jede Tasche (48) ein auf die Bodenwand (24) aufvulkanisiertes Endstück (30) aus Gummi oder gummiartigem Material besitzt, das vorzugsweise mittels Stahleinlagen armiert ist.

6. Taschenförderer nach Anspruch 5,
dadurch gekennzeichnet,
daß das Endstück (30) in der Befestigungsposition der Tasche (48) über die Quertraverse (12) übersteht.

## Claims

1. Pocket conveyor comprising an endless tension member (1) guided over drive and tail pulleys (2, 4), and a plurality of pockets (48) secured to the tension member (1), characterised in that the side walls (25, 26) of the pockets (48) have at least two different folded regions (27, 28) extending on different sides of the tension member (1).

2. Pocket conveyor according to claim 1, characterised in that a first folded region (27) is fan-shaped and is arranged on the internal side of the tension member (1) and that a second folded region (28) has corrugations parallel to the tension member (1) and is arranged on the external side of the tension member (1).

3. Pocket conveyor according to claim 2, characterised in that the corrugations of the second folded region (28) are saw-tooth corrugations.

4. Pocket conveyor according to one of claims 1 to 3, characterised in that the pocket (48) has folds parallel to the edges.

5. Pocket conveyor according to one of claims 1 to 4, characterised in that each pocket (48) has an end piece (30) of rubber or rubber-like material vulcanised on to the bottom wall (24) and preferably reinforced by means of steel inserts.

6. Pocket conveyor according to claim 5, characterised in that the end piece (30) projects beyond the cross member (12) in the securing position of the pocket (48).

## Revendications

1. Transporteur à godets comprenant un organe de traction sans fin (1), qui est guidé par des tambours d'entraînement et de changement de direction (2, 4), et une pluralité de godets (48), qui sont fixés à l'organe de traction (1), caractérisé en ce que les parois latérales (25, 26) des godets (48) présentent au moins deux zones plissés différentes (27, 28) qui s'étendent sur divers côtés de l'organe de traction (1).

2. Transporteur à godets selon la revendication 1, caractérisé en ce qu'une première zone plissée (27) est conformée en éventail et est agencée sur le côté intérieur de l'organe de traction (1) et qu'une seconde zone plissée (28) présente une ondulation parallèle à l'organe de traction (1) et est agencée sur le côté de l'organe de traction (1) dirigé vers l'extérieur.

3. Transporteur à godets selon la revendication 2, caractérisé en ce que l'ondulation de la deuxième zone plissée (28) est conformée en dents de scie.

4. Transporteur à godets selon l'une quelconque des revendications 1 à 3, caractérisé en ce que le godet (48) présente un plissement parallèle au bord.

5. Transporteur à godets selon l'une quelconque des revendications 1 à 4, caractérisé en ce que chaque godet (48) possède une pièce d'extrémité (30) vulcanisée sur la paroi de fond (24), en caoutchouc ou en matériau de type caoutchouc, qui est de préférence armé par des armatures d'acier.

6. Transporteur à godets selon la revendication 5, caractérisé en ce que la pièce d'extrémité (30) déborde, en position de fixation du godet (48), sur la traverse (12).
